# EUROPÄISCHE PATENTSCHRIFT

(11) **EP 3 761 465 B1**
(45) Veröffentlichungstag und Bekanntmachung des Hinweises auf die Patenterteilung: **10.05.2023**
(21) Anmeldenummer: 19183639.4
(22) Anmeldetag: 01.07.2019
(51) Int. Cl.: H02B 1/052

(54) **ANSCHLUSSTEIL MIT INTEGRIERTEN ZUSATZFUNKTIONEN**
CONNECTION PART WITH INTEGRATED ADDITIONAL FUNCTIONS
PIÈCE DE RACCORDEMENT À FONCTIONS AUXILIAIRES INTÉGRÉES

(43) Veröffentlichungstag der Anmeldung: 06.01.2021
(73) Patentinhaber: Siemens Aktiengesellschaft, 80333 München (DE)
(72) Erfinder: Apfelbacher, Walter, 92271 Freihung (DE); Ertel, Christoph, 92237 Sulzbach-Rosenberg (DE)
(74) Vertreter: Siemens Patent Attorneys

(56) Entgegenhaltungen:
- EP-A1- 2 869 678
- AT-B- 242 773
- DE-A1-102012 022 746
- DE-B- 1 143 885
- US-A1- 2010 320 342
- US-A1- 2011 261 549
- US-B1- 6 563 710

## Beschreibung

Die Erfindung betrifft ein Anschlussteil mit integrierten Zusatzfunktionen für den Anschluss eines Bauelements an eine Haltevorrichtung, insbesondere in einem Schaltschrank oder einem offenen Schalttableau Schaltgeräte und Halbleiterschaltgeräte werden üblicherweise mit Kühlkörpern aus Aluminium oder sonstigen Metallen aufgebaut. Dabei werden die Kühlkörper vorzugsweise zur Kühlung der eingesetzten Halbleiter benötigt. Da die Kühler aus einem elektrisch leitfähigen Material ausgebildet sind und vom Bedienpersonal für die Schaltgeräte teilweise mit den Fingern berührt werden, ist es erforderlich diese zuverlässig zu erden.

Diese Erdung erfolgt bisher durch eine Anbindung mittels Schutzleiter an einer Hutschiene. An den Kühlern werden Kontaktflächen und Schraubbefestigungsmöglichkeiten zur Verfügung gestellt. Dort kann der Anwender über Leitungen eine elektrische Verbindung zur Hutschiene herstellen. Bisher muss hier eine zusätzliche Leitung für die Erdung verlegt werden, wodurch diese Lösung kostenintensiv ist. Zudem wird durch diese Verkabelung Bauraum im Schaltschrank beansprucht.

US 2011/261549 A1 offenbart ein elektrisch leitfähiges Anschlussteil mit Anschlusskonturen die eine Kontaktzunge für die elektrische Kontaktierung, ein Federelement und Krallen zur Befestigung auf eine Hutschiene umfassen.

US 6 563 710 B1, US 2010/320342 A1 und DE 10 2012 022746 A1 offenbaren weitere Anschlussteile für den Anschluss eines Bauelements an eine Hutschiene.

Demgemäß besteht die Aufgabe der vorliegenden Erfindung darin, ein funktionsoptimiertes Anschlussteil mit integrierten Zusatzfunktionen für den Anschluss eines Bauelements an eine Haltevorrichtung zu schaffen.

Diese Aufgabe wird erfindungsgemäß durch ein Anschlussteil mit integrierten Zusatzfunktionen nach Anspruch 1 gelöst. Vorteilhafte Aus- und Weiterbildungen, welche einzeln oder in Kombination miteinander eingesetzt werden können, sind der Gegenstand der abhängigen Ansprüche.

Erfindungsgemäß wird diese Aufgabe durch ein Anschlussteil mit integrierten Zusatzfunktionen für den Anschluss eines Bauelements an eine Haltevorrichtung, insbesondere in einem Schaltschrank oder einem offenen Schalttableau gelöst. Die Erfindung zeichnet sich dadurch aus, dass das Anschlussteil auch unter Berücksichtigung einer integrierten Zusatzfunktion in Form einer kabellosen Erdungsfunktion einteilig ausgebildet ist.

Durch das erfindungsgemäße Anschlussteil bzw. Befestigungsteil aus elektrisch leitfähigem Material, vorzugsweise Stahl oder Stahlblech, kann eine zuverlässige Verbindung zu einer Hutschiene, Montageplatte oder Backplane hergestellt werden. Das einteilig ausgebildete Anschlussteil weist mindestens drei integrierte Funktionen auf. Es verfügt über eine Schraubanschlussbefestigung, eine Hutschienenbefestigung und eine zuverlässige Erdungsverbindung. Die Erdungsverbindung erfolgt insbesondere über Krallen- und Schnapphakenkonturen bzw. einem vorzugsweise wellenförmig ausgebildeten Federelement. Ein besonderer Vorteil des erfindungsgemäßen Anschlussteils besteht in seiner Einteiligkeit, welche eine sehr kostengünstige Herstellung und eine einfache Fixierung ermöglichen. Der Anwender muss keine zusätzlichen Erdungsleitungen verlegen und spart dadurch Material und Montagezeiten. Das erfindungsgemäße Anschlussteil ist hinsichtlich seiner Erdungsfunktion kabellos ausgebildet. Insbesondere Halbleiterschaltgeräte können durch diese mechanische Befestigung inklusive Erdungsfunktion in einem einteiligen Anschlussteil in einer Anwendung im Schaltschrank oder in einem offenen Schalttableau auf einfache Art und Weise verbaut werden.

Erfindungsgemäss ist das Anschlussteil aus einem elektrisch leitfähigen Material gefertigt.

Erfindungsgemäss weist das Anschlussteil Anschlusskonturen auf. Erfindungsgemäss umfassen die Anschlusskonturen eine Kontaktzunge für die elektrische Kontaktierung.

Erfindungsgemäss umfassen die Anschlusskonturen ein Federelement. Eine Erweiterung einer speziellen Ausgestaltung des erfindungsgemäßen Konzepts für das Anschlussteil kann vorsehen, dass das Federelement wellenförmig ausgebildet ist.

Erfindungsgemäss umfassen die Anschlusskonturen Krallen.

Erfindungsgemäss weist das Anschlussteil Fortsätze auf, welche derart ausgebildet sind, dass ein Anschluss mittels einer Schraubverbindung vorgesehen ist.

Eine vorteilhafte zusätzliche Ausführungsform des erfindungsgemäßen Anschlussteils kann darin bestehen, dass die Anschlusskonturen Klemmanschlüsse umfassen.

Eine Erweiterung einer speziellen Ausgestaltung des erfindungsgemäßen Konzepts für das Anschlussteil kann vorsehen, dass die Haltevorrichtung als Hutschiene oder Montageplatte ausgebildet ist.

Eine Fortführung des erfindungsgemäßen Konzepts für das Anschlussteil kann darin bestehen, dass die Haltevorrichtung als Backplane ausgebildet ist. Unter einer Backplane wird hier ein Träger für elektrische Bauelemente verstanden, der Leitungen zum elektrischen Verbinden elektrischer Bauelemente aufweist.

Das erfindungsgemäße Anschlussteil ist einteilig ausgebildet und vorzugsweise in Form einer Schiene mit vorzugsweise jeweils zwei sich parallel und positionsgleich gegenüberliegenden Seitenkanten, wobei die jeweiligen Längen der Seitenkantenpaare unterschiedlich sein kann. Das Anschlussteil weist einen Mittelbereich auf, welcher in einer ersten Ebene angeordnet ist. An den beiden Enden des Mittelbereich schließen sich zwei Fortsätze des Anschlussteils an, welche in einer zweiten Ebene, welche parallel zur ersten Ebene ausgebildet ist, angeordnet sind. Die Fortsätze weisen Ausnehmungen auf, über welche eine Anschlussmöglichkeit in Form einer Schraubverbindung möglich ist. Vorzugsweise im Mittelpunkt des Anschlussteils kann eine Durchbohrung für eine weitere Schraubverbindung angeordnet sein. Diese vorzugsweise zentriert angeordnete Anschlussmöglichkeit ist insbesondere für die Anbringung des erfindungsgemäßen Anschlussteils an eine Hutschiene, Montageplatte oder Backplane vorgesehen. Im Mittelbereich oder auch in den beiden Fortsätzen des Anschlussteils können weitere Durchbohrungen positioniert sein, um weitere Anbindungen mittels Schrauben oder ähnlichen Befestigungselementen zu ermöglichen.

Im Mittelbereich des Anschlussteils sind weitere Anschlusskonturen positioniert in Form einer Kontaktzunge für eine elektrische Kontierung, in Form eines vorzugsweise wellenförmigen Federelements oder in Form von Krallen. Weitere Anschlusskonturen wie Haken, Rasthaken, Klemm - oder Steckelemente sind möglich. Das Anschlussteil weist an den Seitenkanten außerdem Klemmelemente auf, welche vorzugsweise als halbkonzentrisch ausgeformte Stege oder als U-förmige Klemmelemente ausgebildet sind. Im Mitelbereich des Anschlussteils können außerdem Ausnehmungen ausgebildet sein. Ebenfalls können im Übergang vom Mittelbereich des Anschlussteils zu den Fortsätzen Ausnehmungen vorgesehen sein.

In diesem Übergang kann zudem vorzugsweise eine weitere Anschlusszunge angeordnet sein.

Weitere Ausführungen und Vorteile der Erfindung werden nachfolgend anhand von Ausführungsbeispielen sowie anhand der Zeichnung erläutert.

Dabei zeigt:
Fig. 1 in einer perspektivischen Darstellung ein erfindungsgemäßes Anschlussteil von oben;
Fig. 2 in einer perspektivischen Darstellung das erfindungsgemäße Anschlussteil nach Fig. 1 von unten.

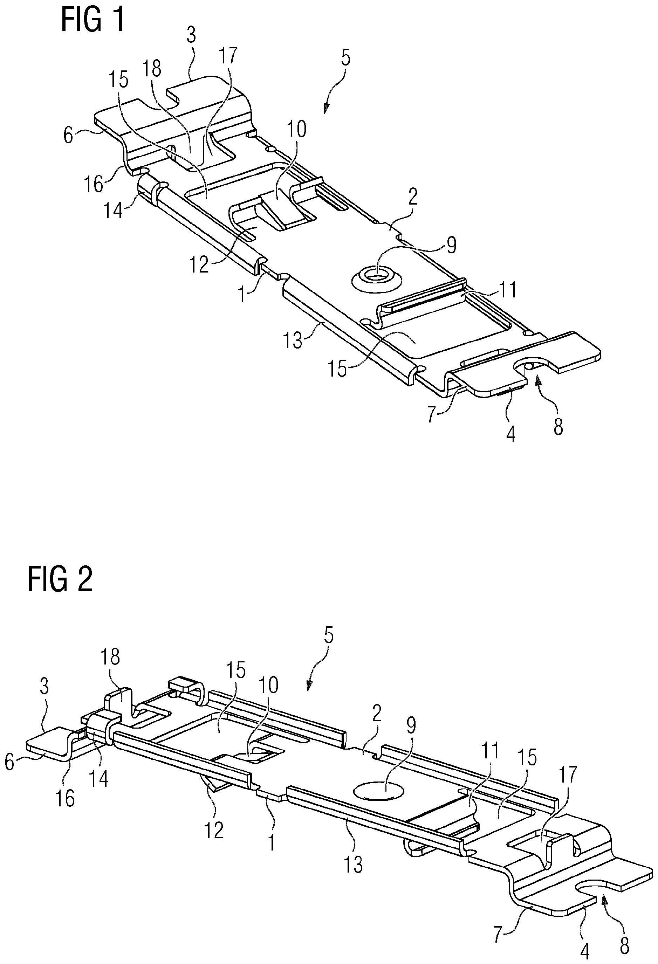

Fig. 1 zeigt ein erfindungsgemäßes Anschlussteil. Das erfindungsgemäße Anschlussteil ist einteilig ausgebildet und vorzugsweise in Form einer Schiene mit vorzugsweise jeweils zwei sich parallel und positionsgleich gegenüberliegenden Seitenkanten 1, 2, 3, 4, wobei die jeweiligen Längen der Seitenkantenpaare unterschiedlich sein kann. Das Anschlussteil weist einen Mittelbereich 5 auf, welcher in einer ersten Ebene angeordnet ist. An den beiden Enden des Mittelbereich 5 schließen sich zwei Fortsätze 6, 7 des Anschlussteils an, welche in einer zweiten Ebene, welche parallel zur ersten Ebene ausgebildet ist, angeordnet sind. Die Fortsätze 6, 7 weisen Ausnehmungen 8 auf, über welche eine Anschlussmöglichkeit in Form einer Schraubverbindung möglich ist. Vorzugsweise im Mittelpunkt des Anschlussteils kann eine Durchbohrung 9 für eine weitere Schraubverbindung angeordnet sein. Diese vorzugsweise zentriert angeordnete Anschlussmöglichkeit ist insbesondere für die Anbringung des erfindungsgemäßen Anschlussteils an eine Hutschiene, Montageplatte oder Backplane vorgesehen. Im Mittelbereich 5 oder auch in den beiden Fortsätzen 6, 7 des Anschlussteils können weitere Durchbohrungen positioniert sein, um weitere Anbindungen mittels Schrauben oder ähnlichen Befestigungselementen zu ermöglichen. Im Mittelbereich 5 des Anschlussteils sind weitere Anschlusskonturen positioniert in Form einer Kontaktzunge 10 für eine elektrische Kontierung, in Form eines vorzugsweise wellenförmigen Federelements 11 und in Form von Krallen 12, wobei das Federelement 11 und die Krallen 12 vorzugsweise die Funktion aufweisen, einen Kühlkörper zu fixieren. Weitere Anschlusskonturen wie Haken, Rasthaken, Klemm - oder Steckelemente sind möglich. Das Anschlussteil weist an den Seitenkanten 1, 2 außerdem Klemmelemente 13, 14 auf, welche vorzugsweise als halbkonzentrisch ausgeformte Stege oder als U-förmige Klemmelemente ausgebildet sind. Im Mitelbereich 5 des Anschlussteils können außerdem Ausnehmungen 15 ausgebildet sein. Ebenfalls können im Übergang 16 vom Mittelbereich 5 des Anschlussteils zu den Fortsätzen 6, 7 Ausnehmungen 17 vorgesehen sein. In diesem Übergang 16 kann zudem vorzugsweise eine weitere Anschlusszunge 18 angeordnet sein.

In Fig. 2 zeigt das erfindungsgemäße Anschlussteil in einer Darstellung von unten.

Das erfindungsgemäße Anschlussteil zeichnet sich dadurch, dass innerhalb eines effizienten Herstellungsprozesses ein einteilig ausgebildetes Anschlussteil mit integrierten Zusatzfunktionen, insbesondere einer kabellosen Erdungsfunktion für eine Anbindung eines Bauelements an eine Haltevorrichtung wie eine Hutschiene, Montageplatte oder Backplane ausgebildet wird. Das erfindungsgemäße Anschlussteil verfügt über eine Mehrzahl an integrierten Zusatzfunktionen, insbesondere einer Erdungsfunktion und ist durch seine unterschiedlichen Anschlusskonturen vielseitig einsetzbar.

### Bezugszeichenliste

- 1: Seitenkante
- 2: Seitenkante
- 3: Seitenkante
- 4: Seitenkante
- 5: Mittelbereich
- 6: Fortsatz
- 7: Fortsatz
- 8: Ausnehmung
- 9: Durchbohrung
- 10: Kontaktzunge
- 11: Federelement
- 12: Kralle
- 13: Klemmelement
- 14: Klemmelement
- 15: Ausnehmung
- 16: Übergang
- 17: Ausnehmung
- 18: Anschlusszunge

## Patentansprüche

1. Anschlussteil mit integrierten Zusatzfunktionen umfassend eine Schraubanschlussbefestigung, eine Hutschienenbefestigung und eine zuverlässige Erdungsverbindung für den Anschluss eines Bauelements an eine Haltevorrichtung, insbesondere in einem Schaltschrank oder einem offenen Schalttableau, wobei das Anschlussteil auch unter Berücksichtigung einer integrierten Zusatzfunktion in Form einer kabellosen Erdungsfunktion einteilig ausgebildet ist,
wobei das Anschlussteil aus einem elektrisch leitfähigen Material gefertigt ist und Anschlusskonturen aufweist, wobei die Anschlusskonturen in einem in einer ersten Ebene angeordneten Mittelbereich (5) des Anschlussteils eine Kontaktzunge (10) für die elektrische Kontaktierung, ein Federelement (11) und Krallen (12) umfassen, und
wobei das Anschlussteil Fortsätze (6, 7) aufweist, die i) sich an den beiden Enden des Mittelbereichs (5) anschließen, ii) in einer zweiten Ebene, welche parallel zur ersten Ebene ausgebildet ist, angeordnet sind und iii) Ausnehmungen (8) aufweisen, über welche ein Anschluss in Form einer Schraubverbindung möglich ist.

2. Anschlussteil nach Anspruch 1, wobei das Federelement (11) wellenförmig ausgebildet ist.

3. Anschlussteil nach einem der Ansprüche 1 bis 2, wobei die Anschlusskonturen Klemmelemente (13, 14) umfassen.

4. Anschlussteil nach einem der Ansprüche 1 bis 3, wobei die Haltevorrichtung als Hutschiene oder Montageplatte ausgebildet ist.

5. Anschlussteil nach einem der Ansprüche 1 bis 3, wobei die Haltevorrichtung als Backplane ausgebildet ist.

## Claims

1. Connection part with integrated additional functions including screw-connection mounting, top-hat rail mounting and reliable earthing connection for the connection of a component to a holding device, in particular in a switchgear cabinet or an open switch panel, wherein the connection part is also designed in one piece taking into account an integrated additional function in the form of a cable-free earthing function,
wherein the connection part is manufactured from an electrically conductive material and has connection contours, wherein the connection contours comprise a contact tongue (10) for electrical contact-connection, a spring element (11) and claws (12) in a central region (5), arranged in a first plane, of the connection part, and
wherein the connection part has projections (6, 7) which i) adjoin the two ends of the central region (5), ii) are arranged in a second plane, which is formed parallel to the first plane, and iii) have recesses (8) via which connection in the form of a screw connection is possible.

2. Connection part according to Claim 1, wherein the spring element (11) is of waved design.

3. Connection part according to either of Claims 1 and 2, wherein the connection contours comprise clamping elements (13, 14).

4. Connection part according to one of Claims 1 to 3, wherein the holding device is designed as a top-hat rail or mounting plate.

5. Connection part according to one of Claims 1 to 3, wherein the holding device is designed as a backplane.

## Revendications

1. Pièce de raccordement à fonctions auxiliaires intégrées, comprenant une fixation de raccordement par vis, une fixation par profilé en chapeau et une liaison fiable de mise à la terre pour le raccordement d'un composant à un dispositif de maintien, notamment dans une armoire de distribution ou un tableau de commutation ouvert, dans laquelle la pièce de raccordement est constituée d'une seule pièce également en considération d'une fonction supplémentaire intégrée, sous la forme d'une fonction de mise à la terre sans câble,
dans laquelle la pièce de raccordement est en un matériau conducteur de l'électricité et a des contours de raccordement, dans laquelle les contours de raccordement comprennent, dans une partie (5) médiane de la pièce de raccordement disposée dans un premier plan, une languette (10) de contact pour la mise en contact électrique, un élément (11) de ressort et des griffes (12), et
dans laquelle la pièce de raccordement a des prolongements (6, 7), qui i) se raccordent aux deux extrémités de la partie (5) médiane, ii) sont disposés dans un deuxième plan, qui est parallèle au premier plan, et iii) ont des évidements (8), par lesquels un raccordement sous la forme d'un vissage est possible.

2. Pièce de raccordement suivant la revendication 1, dans laquelle l'élément (11) de ressort est de forme ondulée.

3. Pièce de raccordement suivant l'une des revendications 1 à 2, dans laquelle les contours de raccordement comprennent des éléments (13, 14) de serrage.

4. Pièce de raccordement suivant l'une des revendications 1 à 3, dans laquelle le dispositif de maintien est constitué sous la forme d'un profilé à chapeau ou d'une plaque de montage.

5. Pièce de raccordement suivant l'une des revendications 1 à 3, dans laquelle le dispositif de maintien est constitué sous la forme d'un backplane.
